Europäisches Patentamt

European Patent Office

Office européen des brevets

(11) Veröffentlichungsnummer: **0 381 963**
**A1**

## (12) EUROPÄISCHE PATENTANMELDUNG

(21) Anmeldenummer: **90100992.8**

(22) Anmeldetag: **18.01.90**

(51) Int. Cl.5: **B62D 15/02**

(30) Priorität: **05.02.89 DE 3903359**

(43) Veröffentlichungstag der Anmeldung:
**16.08.90 Patentblatt 90/33**

(84) Benannte Vertragsstaaten:
**DE ES FR GB IT**

(71) Anmelder: **Bayerische Motoren Werke Aktiengesellschaft**
**Patentabteilung AJ-30 Postfach 40 02 40**
**Petuelring 130**
**D-8000 München 40(DE)**

(72) Erfinder: **Flechtner, Horst**
**Eckherrstrasse 4 a**
**D-8045 Ismaning(DE)**
Erfinder: **Drews, Reinhard, Dr.**
**Ahornweg 15**
**D-8067 Petershausen(DE)**

(54) **"Einrichtung zur Bestimmung des Lenkraddrehwinkels eines Kraftfahrzeuges".**

(57) Zur Bestimmung des Lenkraddrehwinkels eines Kraftfahrzeuges mit einem an der Lenksäule (3) bzw. am Lenkrad (1) angeordneten Drehwinkelgeber ist dieser als berührungslos arbeitender Drehwinkeländerungsgeber (5,6) ausgeführt, der sowohl die Drehwinkeländerungen als auch die jeweilige Drehrichtung des Lenkrades in digitaler Form angibt. Ferner ist am Lenkrad bzw. an der Lenksäule des Kraftfahrzeuges ein berührungslos arbeitender Referenzdrehwinkelgeber (7) vorgesehen. Darüber hinaus ist am Lenkgetriebeausgang bzw. am Lenkführungshebel ein berührungslos arbeitender Lenkraddrehwinkelbereichsgeber (31) angeordnet. Schließlich ist eine Berechnungseinheit vorgesehen, die aus den ermittelten Drehwinkeländerungen, der jeweiligen Drehrichtung, dem zumindest für jede Lenkradumdrehung festgestellten Referenzdrehwinkel und dem ermittelten Drehwinkelbereich des Lenkrades den jeweiligen absoluten Lenkraddrehwinkel berechnet.

Fig. 1

## Einrichtung zur Bestimmung des Lenkraddrehwinkels eines Kraftfahrzeuges.

Die Erfindung betrifft eine Einrichtung zur Bestimmung des Lenkraddrehwinkels eines Kraftfahrzeuges mit einem an der Lenksäule bzw. am Lenkrad des Kraftfahrzeuges angeordneten Drehwinkelgeber.

Eine derartige Einrichtung zur Bestimmung des Lenkraddrehwinkels eines Kraftfahrzeuges ist bereits aus der DE-OS 28 21 691 bekannt. Bei dieser bekannten Einrichtung wird der Drehwinkel des Lenkrades des Kraftfahrzeuges mit Hilfe eines Mehrgangpotentiometers festgestellt. Diese bekannte Einrichtung hat jedoch eine Reihe von Nachteilen: Sie ist zum einen sehr teuer und ist zum anderen einem ständigen Verschleiß unterworfen, da bei einem Potentiometer ein der Abnützung ausgesetzter Schleifkontakt vorgesehen ist, der an einem zweiten Leiterteil unter Einhaltung eines notwendigen Kontaktdruckes entlanggleitet. Darüber hinaus ist die Verarbeitung des vom Potentiometer abgegebenen Meßsignals aufgrund des kleinen elektrischen Stromes und der Temperaturempfindlichkeit der Meßschaltung sehr problematisch. Schließlich ist die Anbringung des Potentiometers am Lenkrad des Kraftfahrzeuges aufwendig, da für eine genaue Messung keinerlei Einbautoleranzen, insbesondere kein Axialspiel zulässig ist.

Es ist daher Aufgabe der Erfindung, eine preisgünstige und höchstgenau arbeitende Einrichtung eingangs genannter Art zu schaffen, die sich insbesondere durch ihre Verschleißfreiheit, ihre einfache Einbaubarkeit in ein Kraftfahrzeug, ihre Temperaturunempfindlichkeit sowie durch die Möglichkeit der Selbstüberwachung auszeichnet.

Diese Aufgabe wird erfindungsgemäß dadurch gelöst, daß der Drehwinkelgeber ein berührungslos arbeitender Drehwinkeländerungsgeber ist, der sowohl die Drehwinkeländerungen als auch die jeweilige Drehrichtung des Lenkrades in digitaler Form angibt, daß am Lenkrad bzw. an der Lenksäule des Kraftfahrzeuges ein berührungslos arbeitender Referenzdrehwinkelgeber angeordnet ist, daß am Lenkgetriebeausgang bzw. am Lenkführungshebel ein berührungslos arbeitender Lenkraddrehwinkelbereichsgeber angeordnet ist und daß eine Berechnungseinheit vorgesehen ist, die aus den ermittelten Drehwinkeländerungen, der jeweiligen Drehrichtung, dem zumindest für jede Lenkradumdrehung festgestellten Referenzdrehwinkel und dem ermittelten Drehwinkelbereich des Lenkrades den jeweiligen absoluten Lenkraddrehwinkel berechnet.

Da bei der erfindungsgemäßen Einrichtung der Drehwinkeländerungsgeber, der Referenzdrehwinkelgeber sowie der Lenkraddrehwinkelbereichsgeber berührungslos arbeiten, ist die erfindungsgemäße Einrichtung keinerlei Verschleiß unterworfen und hat daher eine sehr lange Lebensdauer. Da die erfindungsgemäße Einrichtung berührungslos arbeitet, also keine Bauteile spielfrei zueinander angeordnet sein müssen, ist die erfindungsgemäße Einrichtung gegenüber einem Axialspiel bzw. einer Exzentrizität der Lenksäule unempfindlich. Die erfindungsgemäße Einrichtung ist vollkommen temperaturunempfindlich, da die temperaturabhängigen Sensorsignalamplituden für die Weiterverarbeitung in einer Kompa ratorschaltung in Digitalimpuse gewandelt werden. Ein "Temperaturdrift" der elektronischen Bauteile verfälscht das Meßergebnis nicht. Da bei der erfindungsgemäßen Einrichtung die exakte Bestimmung des Lenkraddrehwinkels durch die Kombination des Drehwinkeländerungsgebers und des Referenzdrehwinkelgebers erfolgt, und parallel dazu der jeweilige Lenkraddrehwinkelbereich durch den Lenkraddrehwinkelbereichsgeber bestimmt wird, kann die erfindungsgemäße Einrichtung aufgrund ihrer zumindest teilweisen Redundanz selbstüberwachend ausgeführt werden.

Nach einer Weiterbildung der Erfindung weist der Drehwinkeländerungsgeber eine koaxial zur Lenksäule angeordnete und in deren Umfangsrichtung hinsichtlich ihrer Magnetpolung alternierend magnetisierte Magnetfolie auf, deren in Umfangsrichtung der Lenksäule alternierendes Magnetfeld auf zwei in Umfangsrichtung der Lenksäule versetzt angeordnete Magnetfeldsensoren einwirkt, wodurch diese zwei phasenverschobene sinusähnliche Ausgangssignale abgeben. Dieser Drehwinkeländerungsgeber zeichnet sich insbesondere durch seinen einfachen Aufbau, seine Störsicherheit sowie durch seine Unempfindlichkeit gegenüber einem Axialspiel sowie gegenüber einer begrenzten Exzentrizität der Lenksäule aus.

Um eine gute Auswertung der beiden phasenverschobenen sinusähnlichen Ausgangssignale der beiden Magnetfeldsensoren zu gewährleisten, beträgt der Phasenwinkel der beiden phasenverschobenen sinusähnlichen Ausgangssignale zwischen $10°$ und $50°$, vorzugsweise ca. $25°$.

Gemäß einer Ausführungsform der erfindungsgemäßen Einrichtung werden die beiden phasenverschobenen sinusähnlichen Ausgangssignale der beiden Magnetfeldsensoren zur Bestimmung der Drehwinkeländerungen sowie zur Bestimmung der jeweiligen Drehrichtung des Lenkrades einer elektronischen Recheneinheit, insbesondere einem Mikrocomputer zugeführt. In dieser Recheneinheit wird von den beiden phasenverschobenen sinusähnlichen Ausgangssignalen der beiden Magnetfeldsensoren ein Winkeländerungssignal mit hoher Genauigkeit abgeleitet. Alternativ zur Recheneinheit können die beiden phasenverschobenen sinusähnlichen Ausgangssignale der beiden Magnetfeldsensoren einer Komparatorschaltung zugeführt werden, durch die davon zwei phasenverschobene Rechtecksignale abgeleitet werden, durch die wiederum ein Zählerbaustein zur Vorwärts-/Rückwärtszählung angesteuert wird. Diese alternative Ausführungsform zeichnet sich insbesondere durch ihren sehr einfachen Aufbau und darüber hinaus durch ihre hohe Auflösung und damit Genauigkeit aus.

Bei dieser zweiten Ausführungsform werden vorzugsweise durch eines der beiden Rechtecksignale der Zählrichtungseingang und durch das andere Rechtecksignal der Zähleingang des Zählerbausteins angesteuert.

Vorzugsweise werden bei dem Drehwinkeländerungsgeber der erfindungsgemäßen Einrichtung die beiden Magnetfeldsensoren zumindest nahezu äquidistant zur Magnetfolie angeordnet.

Es hat sich ferner als vorteilhaft erwiesen, wenn als Magnetfeldsensoren Hall-Sensoren, insbesondere mit sog. Flußkonzentratoren verwendet werden. Durch diese Flußkonzentratoren kann das Magnetfeld an der magnetfeldempfindlichen Stelle der Hall-Sensoren verstärkt bzw. konzentriert werden.

Zur Bestimmung des Referenzdrehwinkels ist gemäß einer Ausführungsform der Erfindung ein Magnetpol der Magnetfolie verstärkt ausgebildet. Dieser verstärkte Magnetpol wird dann durch Amplitudenauswertung des Ausgangssignals eines der beiden Magnetfeldsensoren zur Referenzdrehwinkelbestimmung detektiert. Alternativ dazu ist bei einer anderen Ausführungsform der Erfindung zur Bestimmung des Referenzdrehwinkels die Magnetfolie bei einem Magnetpol und vorzugsweise zusätzlich auch bei den beiden unmittelbar benachbarten Magnetpolen gegenüber dem übrigen Teil der Magnetfolie in Axialrichtung der Lenksäule breiter ausgebildet. In diesem Falle wird der exponierte Teil der Magnetfolie durch einen dritten Magnetfeldsensor zur Referenzdrehwinkelbestimmung detektiert.

Vorzugsweise besteht der Lenkraddrehwinkelbereichsgeber aus einem am Lenkgetriebeausgang ortsfest angeordneten Magnetfeldgeber und einem am Lenkstockhebel bzw. an der Lenkgetriebeausgangswelle angeordneten Magnetring mit in Umfangsrichtung vorgegebener Magnetfeldverteilung. Ein derart aufgebauter Lenkraddrehwinkelbereichsgeber gibt an seinem Ausgang ein Signal ab, das beispielsweise mit zunehmendem Lenkraddrehwinkel proportional ansteigt. Dieser Lenkraddrehwinkelbereichsgeber hat lediglich die Aufgabe, den jeweiligen Lenkraddrehwinkelbereich anzugeben, in dem der jeweilige Lenkraddrehwinkel gerade liegt. Zusätzlich kann die Geradeausstellung der Räder durch eine Analogauswertung des Lenkraddrehwinkelbereichsgebersignals in seiner Mittelposition erfaßt werden.

Für diesen Lenkraddrehwinkelbereichsgeber hat es sich als vorteilhaft erwiesen, wenn als Magnetfeldsensor ein Hall-Sensor oder eine Magnetfeldplatte verwendet wird.

Zur Ausschaltung etwaiger Temperatureinflüsse ist der Magnetfeldgeber vorzugsweise mit einer Temperaturkompensationsschaltung versehen.

Gemäß einer vorteilhaften Ausführung der Erfindung ist der Magnetring in Form eines Aluminiumrings oder Kunststoffrings mit aufgesetzten bzw. eingesetzten Stabmagneten ggf. unterschiedlicher Magnetfeldstärke versehen.

Alternativ dazu umfaßt der Magnetring einen Magnetringträger, der eine magnetisierbare Kunststcffolie trägt, die zur Erzielung einer gewünschten Magnetfeld-Drehwinkel-Kennlinie inhomogen magnetisiert ist.

Im folgenden wird die Erfindung anhand eines Ausführungsbeispieles näher erläutert.

Es zeigen

Fig. 1 den Fuß des Lenkrades sowie den oberen Teil der Verkleidung der Lenksäule eines Kraftfahrzeuges mit einem daran angeordneten Drehwinkeländerungsgeber,

Fig. 2 die ausgebreitete Magnetfolie des Drehwinkeländerungsgebers von Fig. 1,

Fig. 3 die Anordnung der Hall-Sensoren des Drehwinkeländerungsgebers von Fig. 1,

Fig. 4 das Blockschaltbild einer elektronischen Schaltungsanordnung zur Auswertung der sinusähnlichen Ausgangssignale der Hall-Sensoren,

Fig. 5 ein Signalfluß- bzw. Impulsdiagramm der elektronischen Schaltungsanordnung von Fig. 4,

Fig. 6 ein Diagramm, in das in Abhängigkeit vom Phasenwinkel zwischen den Ausgangssignalen der Hall-Sensoren der jeweils zulässige Quotient der Komparatorschwelle zur Amplitude der Hall-Sonden-Ausgangssignale schraffiert eingezeichnet ist,

Fig. 7 einen am unteren Teil des Lenkgetriebegehäuses angeordneten Lenkraddrehwinkelbereichsgeber und

Fig. 8 den Magnetring des Lenkraddrehwinkelbereichsgebers von Fig. 7 in der Draufsicht.

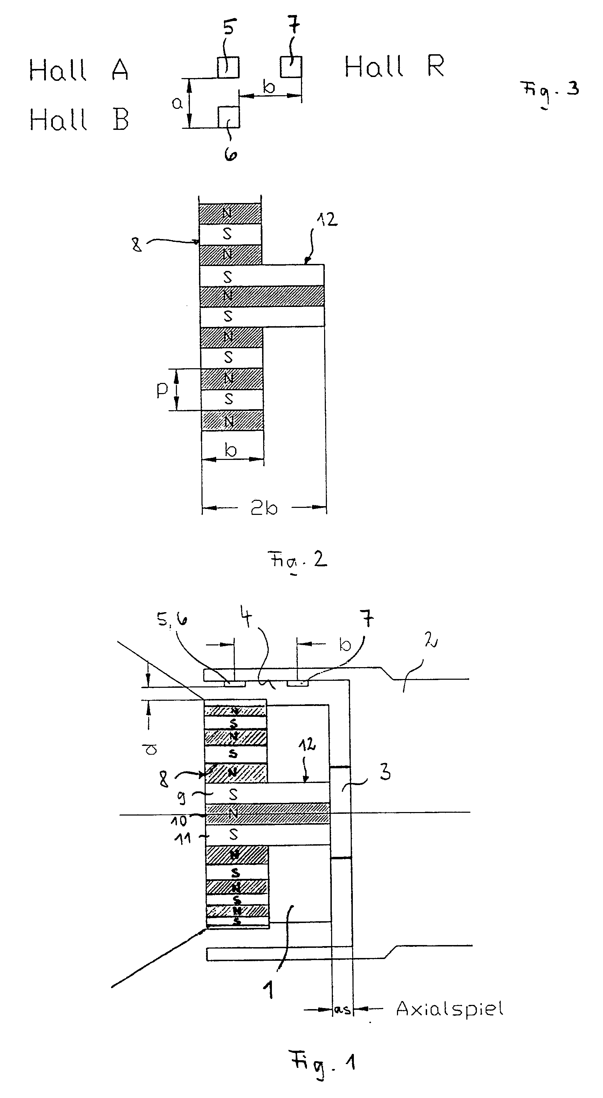

In Fig. 1 ist der Fuß 1 eines in der Figur nur angedeuteten Lenkrades eines Kraftfahrzeuges im Inneren des oberen Teils der Verkleidung 2 der Lenksäule 3 dargestellt. An der Innenseite 4 des oberen Teils der Verkleidung 2 der Lenksäule 3 sind drei Hall-Sensoren 5, 6 und 7 befestigt. Die beiden Hall-Sensoren 5 und 6 haben vom Hall-Sensor 7 einen axialen Abstand b. Dieser Abstand b entspricht der Breite des überwiegenden Teils der auf dem Fuß 1 des Lenkrades zylindrisch angeordneten Magnetfolie 8. Diese Breite b der Magnetfolie 8 soll vorzugsweise der Summe aus dem gesamten Axialspiel as, der Sensorbreite und dem gewünschten Sicherheitsabstand bestehen. Die Magnetfolie 8 ist koaxial zur Lenksäule 3 angeordnet und in deren Umfangsrichtung hinsichtlich ihrer Magnetpolung alternierend magnetisiert. Das in Umfangsrichtung der Lenksäule 3 alternierende Magnetfeld der Magnetfolie 8 wirkt auf die beiden in Umfangsrichtung der Lenksäule 3 versetzt angeordneten Hall-Sensoren 5 und 6 ein, wodurch diese zwei phasenverschobene sinusähnliche Ausgangssignale abgeben. Zur Bestimmung des Referenzdrehwinkels ist die Magnetfolie 8 bei den drei Magnetpolen 9, 10 und 11 gegenüber dem übrigen Teil der Magnetfolie 8 in Axialrichtung der Lenksäule 3 breiter ausgebildet. Dieser exponierte Teil 12 der Magnetfolie 8 wirkt nur dann auf den Hall-Sensor 7 ein, wenn er diesem unmittelbar gegenüberliegt. Auf diese Weise kann durch den dritten Hall-Sensor 7 der Referenzdrehwinkel detektiert werden.

Da alle drei Hall-Sensoren 5, 6 und 7 mit dem radialen Abstand d zur koaxial zur Lenksäule 3 am Fuß 1 des Lenkrades befestigten Magnetfolie 8 angeordnet sind, wird das von der Magnetfolie 8 hervorgerufene alternierende Magnetfeld von den Hall-Sensoren 5, 6 und 7 berührungslos detektiert.

In Fig. 2 ist ein Teil der Magnetfolie von Fig. 1 in der Zeichenebene ausgebreitet dargestellt. Wie der Fig. 2 zu entnehmen ist, ist die Magnetfolie 8 in Umfangsrichtung der Lenksäule 3 (Fig. 1) hinsichtlich ihrer Magnetpolung alternierend magnetisiert. Bei der in der Fig. 2 gezeigten Magnetfolie 8 ist der Abstand zweier Pole derselben Polarität, also der Polpaarabstand gleich p.

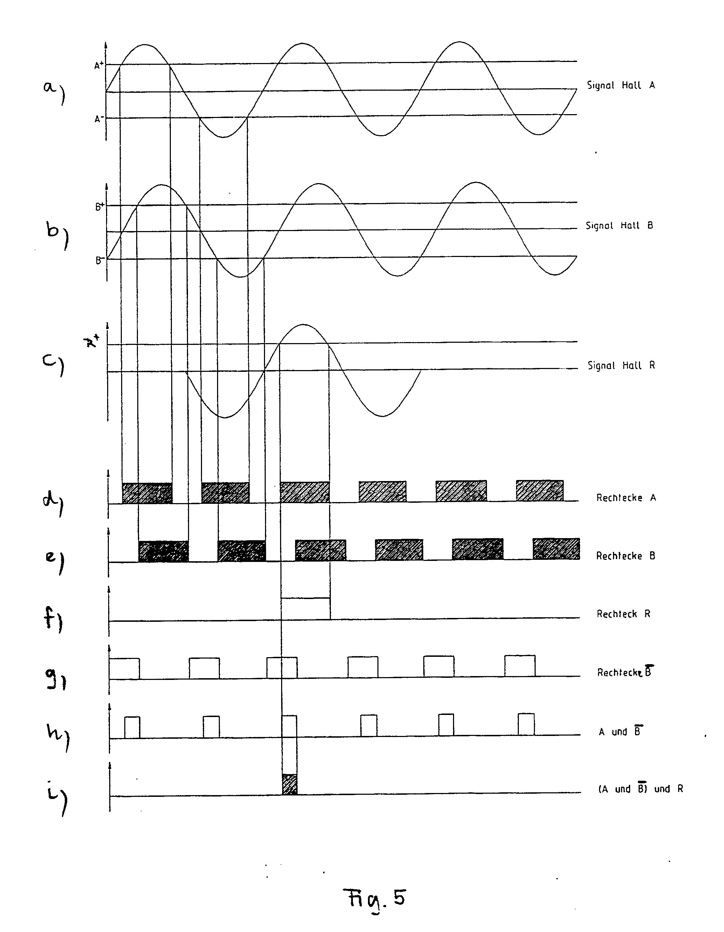

In Fig. 3 ist die Anordnung der Hall-Sensoren 5, 6 und 7 an der Innenseite 4 des oberen Teils der Verkleidung 2 der Lenksäule 3 (siehe dazu auch Fig. 1) dargestellt. Die beiden Hall-Sensoren 5 und 6, auch als Hall A und Hall B bezeichnet, sind in Umfangsrichtung der Lenksäule 3 (Fig. 1) mit dem Sensorabstand a versetzt hintereinander angeordnet. Der Sensorabstand a setzt sich dabei aus dem Polpaarabstand p und dem Phasenverzug φ (siehe dazu auch Fig. 6) zusammen. Um die Breite b des überwiegenden Teils der Magnetfolie 8 ist der Hall-Sensor 7, auch Hall R genannt, relativ zu den Hall-Sensoren 5 und 6 in Axialrichtung der Lenksäule 3 (Fig. 1) versetzt angeordnet.

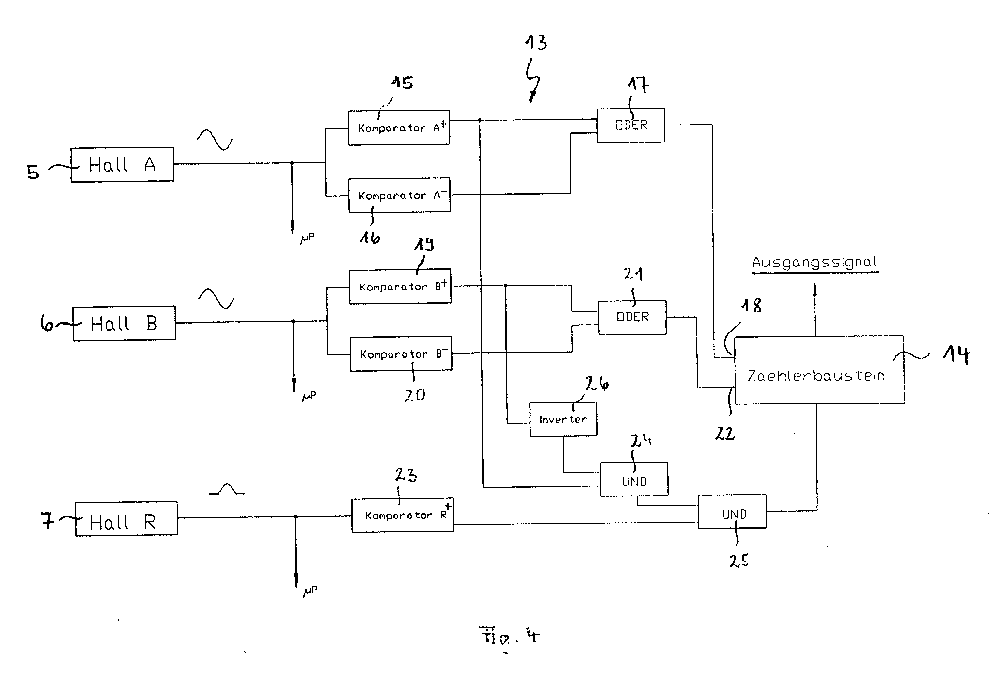

Nachdem vorstehend der Aufbau des Drehwinkeländerungsgebers sowie des Referenzdrehwinkelgebers beschrieben wurde, wird im folgenden anhand der Fig. 4 und 5 deren Funktionsweise erläutert.

Bei einer Drehung des Lenkrades des Kraftfahrzeuges wird vom Hall-Sensor 5 (Hall A) und vom Hall-Sensor 6 (Hall B) jeweils ein sinusähnliches Ausgangssignal (Signal Hall A und Signal Hall B) (siehe dazu insbesondere Fig. 5a und b) abgegeben. Diese beiden Ausgangssignale der Hall-Sensoren 5 und 6 (Signal Hall A und Signal Hall B) sind auf die Einwirkung des Magnetfeldes der Magnetfolie 8 (Fig. 1) auf die Hall-Sensoren 5 und 6 zurückzuführen. Da die Hall-Sensoren 5 und 6 in Umfangsrichtung der Lenksäule 3 (Fig. 1) versetzt angeordnet sind, sind auch die beiden Ausgangssignale der beiden Hall-Sensoren 5 und 6 (Signal Hall A und Signal Hall B) phasenverschoben. Der Phasenwinkel zwischen den beiden sinusähnlichen Ausgangssignalen der beiden Hall-Sensoren 5 und 6 beträgt dabei zwischen $10°$ und $50°$, vorzugsweise $25°$. Wenn der exponierte Teil 12 der Magnetfolie 8 (Fig. 1) am Hall-Sensor 7 vorbeirotiert, wird in diesem ebenfalls ein sinusähnliches Signal (Signal Hall R) erzeugt (siehe dazu insbesondere 5c). Dieses Signal Hall R wird zur Referenzdrehwinkelbestimmung ausgewertet.

Wie in der Fig. 4 durch die Pfeile an den Ausgängen der Hall-Sensoren 5 und 6 angedeutet, können die beiden phasenverschobenen sinusähnlichen Ausgangssignale der beiden Hall-Sensoren 5 und 6 zur Bestimmung der Drehwinkeländerungen sowie zur Bestimmung der jeweiligen Drehrichtung des Lenkrades einer elektronischen Recheneinheit, hier einem Mikroprozessor (µP) zugeführt werden. Diesem Mikroprozessor (µP) müßte dann auch das Ausgangssignal des Hall-Sensors 7 zur Detektion des Referenzdrehwinkels zugeführt werden. Alternativ dazu können, wie in der Fig. 4 dargestellt, die beiden phasenverschobenen sinusähnlichen Ausgangssignale (Signal Hall A und Signal Hall B) der beiden Hall-Sensoren 5 und 6 einer insgesamt mit 13 bezeichneten elektronischen Schaltungsanordnung zugeführt werden, durch die davon zwei phasenverschobene Rechtecksignale (Rechtecke A und Rechtecke B) (siehe dazu insbesondere Fig. 5d und e) abgeleitet werden, durch die wiederum ein Zählerbaustein 14 , zur Vorwärts-/Rückwärtszählung angesteuert wird.

In der elektronischen Schaltungsanordnung 13 wird das Ausgangssignal (Signal Hall A) des Hall-Sensors 5 parallel einem ersten Komparator 15 und einem zweiten Komparator 16 zugeführt. Während das Ausgangssignal des Hall-Sensors 5 (Signal Hall A) im ersten Komparator 15 mit einem positiven Schwellwert $A^+$ verglichen wird, wird es im zweiten Komparator 16 mit einem negativen Schwellwert $A^-$ verglichen. Die Ausgangssignale der beiden Komparatoren 15 und 16 werden einem ODER-Glied 17 zugeführt. Am Ausgang dieses ODER-Gliedes 17 erscheint dann das in Fig. 5d dargestellte Signal "Rechtecke A". Dieses Signal "Rechtecke A" wird dann dem Zählrichtungseingang 18 des Zählerbausteines 14 zugeführt.

Analog dazu wird das Ausgangssignal des Hall-Sensors 6 (Signal Hall B) parallel einem dritten Komparator 19 und einem vierten Komparator 20 zugeführt. Das Ausgangssignal des Hall-Sensors 6 (Signal Hall B) wird im dritten Komparator 19 mit einem positiven Schwellwert $B^+$ und im vierten Komparator 20 mit einem negativen Schwellwert $B^-$ verglichen. Die Ausgangssignale der beiden Komparatoren 19 und 20 werden einem zweiten ODER-Glied 21 zugeführt, an dessen Ausgang das in Fig. 5e dargestellte Rechtecksignal "Rechtecke B" erscheint.

Dieses Signal "Rechtecke B" wird dem Zähleingang 22 des Zählerbausteins 14 zugeführt.

Schließlich wird das Ausgangssignal des Hall-Sensors 7 einem fünften Komparator 23 zugeführt. In diesem Komparator 23 wird das Ausgangssignal des Hall-Sensors 7 (Signal Hall R) mit einem positiven Schwellwert $R^+$ verglichen. Das ·Ausgangssignal des fünften Komparators 23 (Rechteck R) (siehe dazu insbesondere Fig. 5f) wird ebenso wie das Ausgangssignal eines ersten UND-Gliedes 24 (A und $\overline{B}$) (siehe dazu insbesondere Fig. 5h) einem zweiten UND-Glied 25 zugeführt, durch dessen Ausgangssignal ((A und $\overline{B}$) und R) (siehe dazu insbesondere Fig. 5i)) der Zählerbaustein 14 rückgesetzt bzw. auf einen gewünschten Wert voreingestellt werden kann. Dem ersten UND-Glied 24 wird an seinem einen Eingang das Ausgangssignal des ersten Komparators 15 (Rechtecke A) und an seinem zweiten Eingang durch Invertierung des Ausgangssignals des dritten Komparators (Rechtecke B) durch den Inverter 26 das in der Fig. 5g dargestellte Signal "Rechtecke $\overline{B}$" zugeführt.

Während durch den Hall-Sensor 7 für jede Lenkradumdrehung der Referenzdrehwinkel festgestellt wird, bei dem der Zählerbaustein 14 rückgesetzt bzw. auf einen gewünschten Wert voreingestellt wird, werden durch die von den sinusähnlichen Ausgangssignalen der Hall-Sensoren 5 und 6 abgeleiteten Rechtecksignale (Rechtecke A und Rechtecke B) (siehe dazu insbesondere auch Fig. 5d und e) der Zählrichtungseingang 18 sowie der Zähleingang 22 des Zählerbausteins 14 angesteuert, wodurch die Drehwinkeländerungen vorzeichenrichtig angegeben werden.

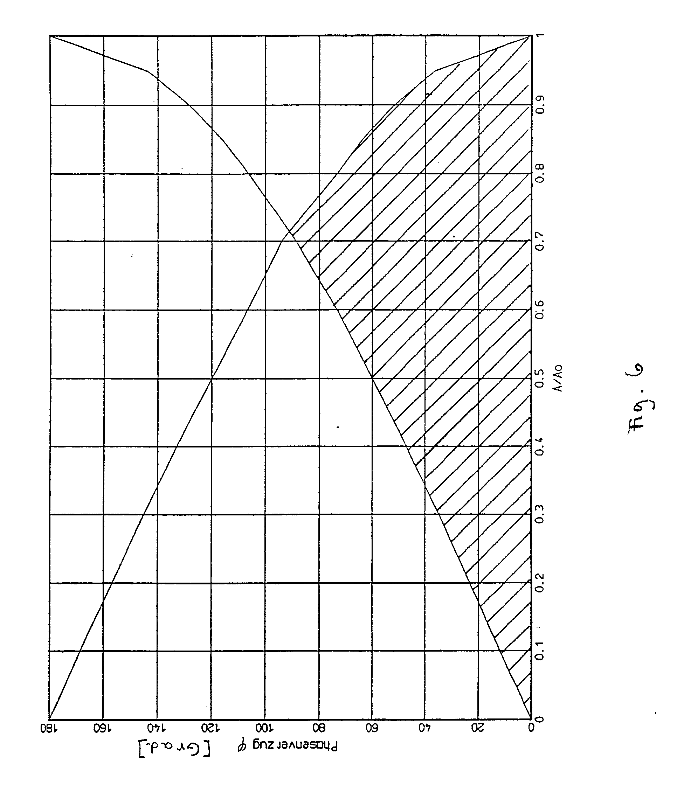

In Verbindung mit dem Signal des Lenkraddrehwinkelbereichsgebers (30, 31) (Fig. 7) wird der Zählerbaustein (14) auf die gewünschten Durchdrehmarken innerhalb des gesamten Lenkradwinkelbereichs gesetzt. Der Aufwand kann reduziert werden, wenn die Absolutbeträge der Schwellenhöhen $A^+$, $A^-$, $B^+$, $B^-$ sowie $R^+$ gleich hoch gewählt werden, im folgendenA genannt.

In der graphischen Darstellung von Fig. 6 sind für verschiedene Phasenwinkel $\phi$ zwischen den Ausgangssignalen der beiden Hall-Sensoren 5 und 6 die jeweils zulässigen Quotienten der Komparatorschwelle A zum Scheitelwert $A_0$ der sinusähnlichen Signale schraffiert eingezeichnet. Eine Exzentrizität des Lenkrads führt zu einer Schwankung des Abszissenwertes; der Phasenverzug $\phi$ ist so einzustellen, daß bei einer Maximalschwankung $A/A_0$ der schraffierte Bereich nicht verlassen wird.

In Fig. 7 ist der untere Teil des Lenkgetriebegehäuses 27 dargestellt, aus dem die Lenkgetriebeausgangswelle 28 herausragt, an der der Lenkstockhebel 29 angeordnet ist. Zur Drehwinkelbereichserkennung ist an der Lenkgetriebeausgangswelle 28 ein sog. Magnetring 30 befestigt, dessen Magnetfeld auf einen Magnetfeldsensor, beispielsweise einen Hall-Sensor 31 einwirkt.

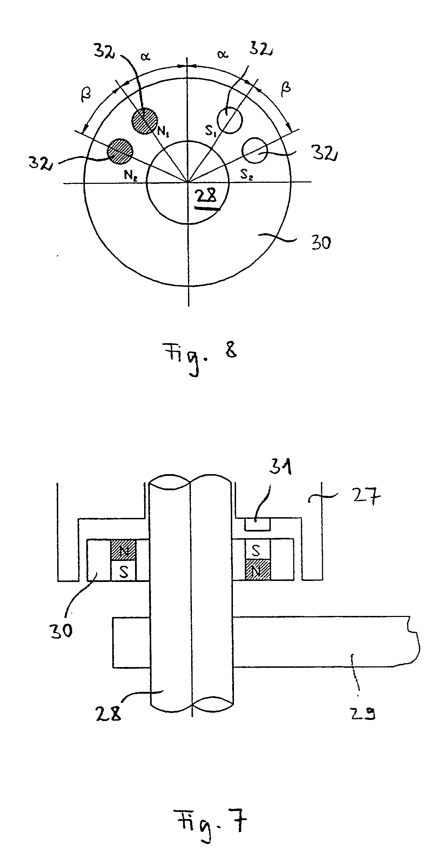

In Fig. 8 ist der Magnetring 30 in der Draufsicht dargestellt. Der Magnetring 30 ist bei dem dargestellten Ausführungsbeispiel ein Aluminiumring mit eingesetzten Stabmagneten ggf. unterschiedlicher Magnetfeldstärke. Durch die Anordnung bzw. Polarisierung der einzelnen Stabmagnete wird eine Magnetfeldverteilung erreicht, die bewirkt, daß das vom Magnetfeldsensor 31 bei einer Drehung des Lenkrades abgegebene Ausgangssignal proportional, im Idealfall linear, also direkt proportional ist. So kann das Ausgangssignal des Magnetfeldsensors 31 beispielsweise bei einer Drehung des Lenkrades entgegen dem Uhrzeigersinn stetig kleiner werden, während es bei einer Drehung des Lenkrades im Uhrzeigersinn stetig größer wird. Auf diese Weise kann der jeweilige Lenkwinkelbereich des Lenkraddrehwinkels berührungslos und daher verschleißfrei sehr genau bestimmt werden.

Die Geradeausstellung der Räder wird so justiert, daß der Magnetfeldsensor 31 (ggf. mit Flußkonzentrator) exakt zwischen den beiden Polen steht und damit als Signal $U_{Speise}/2$ liefert. Bei Verwendung einer Temperaturkompensation und Messung von $U_{Speise}$ kann die Geradeausstellung der Räder sehr exakt bestimmt werden.

Da bei der erfindungsgemäßen Einrichtung neben dem Lenkwinkelbereichsgeber auch noch zusätzlich die Kombination aus dem Referenzdrehwinkelgeber und dem Drehwinkeländerungsgeber vorgesehen ist, kann die erfindungsgemäße Einrichtung aufgrund ihrer Redundanz selbstüberwachend und daher äußerst funktionssicher ausgeführt werden.

## Ansprüche

1. Einrichtung zur Bestimmung des Lenkraddrehwinkels eines Kraftfahrzeuges mit einem an der Lenksäule bzw. am Lenkrad des Kraftfahrzeuges angeordneten Drehwinkelgeber, dadurch gekennzeichnet, daß der Drehwinkelgeber ein berührungslos arbeitender Drehwinkeländerungsgeber (5, 6, 8) ist, der sowohl die Drehwinkeländerungen als auch die jeweilige Drehrichtung des Lenkrades in digitaler Form angibt, daß am Lenkrad bzw. an der Lenksäule (3) des Kraftfahr-

zeuges ein berührungslos arbeitender Referenz-drehwinkelgeber (7, 12) angeordnet ist, daß am Lenkgetriebeausgang (27) bzw. am Lenkführungs-hebel ein berührungslos arbeitender Lenkraddreh-winkelbereichsgeber (30, 31) angeordnet ist und daß eine Berechnungseinheit vorgesehen ist, die aus den ermittelten Drehwinkeländerungen, der jeweiligen Drehrichtung, dem zumindest für jede Lenkradumdrehung festgestellten Referenzdrehwinkel und dem ermittelten Drehwinkelbereich des Lenkrades den jeweiligen absoluten Lenkraddrehwinkel berechnet.

2. Einrichtung nach Anspruch 1,
dadurch gekennzeichnet, daß der Drehwinkeländerungsgeber (5, 6, 8) eine koaxial zur Lenksäule (3) angeordnete und in deren Umfangsrichtung hin-sichtlich ihrer Magnetpolung alternierend magneti-sierte Magnetfolie (8) aufweist, deren in Umfangsrichtung der Lenksäule (3) alternierendes Magnetfeld auf zwei in Umfangsrichtung der Lenksäule (3) versetzt angeordnete Magnetfeldsensoren (5, 6) einwirkt, wodurch diese zwei phasenverschobene sinusähnliche Ausgangssignale (Signal Hall A, Signal Hall B) abgeben.

3. Einrichtung nach Anspruch 2,
dadurch gekennzeichnet, daß der Phasenwinkel (Phasenverzug φ) der beiden phasenverschobenen sinusähnlichen Ausgangssignale (Signal Hall A, Signal Hall B) der beiden Magnetfeldsensoren (5, 6) zwischen 10° und 50°, vorzugsweise 25° beträgt.

4. Einrichtung nach Anspruch 2 oder 3,
dadurch gekennzeichnet, daß die beiden phasenverschobenen sinusähnlichen Ausgangssignale (Signal Hall A, Signal Hall B) der beiden Magnetfeldsensoren (5, 6) zur Bestimmung der Drehwinkeländerungen sowie zur Bestimmung der jeweiligen Drehrichtung des Lenkrades einer elektroni-schen Recheneinheit, insbesondere einem Mikro-computer (μP) zugeführt werden.

5. Einrichtung nach Anspruch 2 oder 3,
dadurch gekennzeichnet, daß die beiden phasenverschobenen sinusähnlichen Ausgangssignale (Signal Hall A, Signal Hall B) der beiden Magnetfeldsensoren (5, 6) einer Komparatorschaltung (13) zugeführt werden, durch die davon zwei phasenverscho bene Rechtecksignale (Rechtecke A, Rechtecke B) abgeleitet werden, durch die wiederum ein Zählerbaustein (14) zur Vorwärts-/Rückwärtszählung angesteuert wird.

6. Einrichtung nach Anspruch 5,
dadurch gekennzeichnet, daß durch eines der beiden Rechtecksignale (Rechtecke A, Rechtecke B) der Zählrichtungseingang (18) und durch das andere Rechtecksignal der Zähleingang (22) des Zählerbausteins (14) angesteuert werden.

7. Einrichtung nach einem der Ansprüche 2 bis 6,
dadurch gekennzeichnet, daß die beiden Magnetfeldsensoren (5, 6) zumindest nahezu äquidistant zur Magnetfolie (8) angeordnet sind.

8. Einrichtung nach einem der Ansprüche 2 bis 7,
dadurch gekennzeichnet, daß die Magnetfeldsensoren (5, 6) Hall-Sensoren sind.

9. Einrichtung nach Anspruch 8,
dadurch gekennzeichnet, daß die Hall-Sensoren (5, 6) Flußkonzentratoren aufweisen.

10. Einrichtung nach einem der Ansprüche 2 bis 9,
dadurch gekennzeichnet, daß zur Bestimmung des Referenzdrehwinkels ein Magnetpol der Magnetfolie (8) verstärkt ausgebildet ist und daß dieser verstärkte Magnetpol durch Amplitudenauswertung des Ausgangssignals eines der beiden Magnetfeldsensoren (5, 6) zur Referenzdrehwinkelbestimmung detektiert wird.

11. Einrichtung nach einem der Ansprüche 2 bis 9,
dadurch gekennzeichnet, daß zur Bestimmung des Referenzdrehwinkels die Magnetfolie (8) bei einem Magnetpol und vorzugsweise zusätzlich auch bei den beiden unmittelbar benachbarten Magnetpolen (9, 10, 11) gegenüber dem übrigen Teil der Magnetfolie (8) in Axialrichtung der Lenksäule (3) breiter ausgebildet ist und daß der exponierte Teil (12) der Magnetfolie (8) durch einen dritten Magnetfeld-sensor (7) zur Referenzdrehwinkelbestimmung de-tektiert wird.

12. Einrichtung nach einem der vorhergehenden Ansprüche,
dadurch gekennzeichnet, daß der Lenkraddrehwinkelbereichsgeber (30, 31) aus einem am Lenkge-triebeausgang (27) ortsfest angeordneten Magnet-feldgeber (31) und einem am Lenkstockhebel (29) bzw. an der Lenkgetriebeausgangswelle (28) angeordneten Magnetring (30) mit in Umfangsrichtung vorgegebener Magnetfeldverteilung oder alternativ dazu aus einem am Achsträger ortsfest angeordneten Magnetfeldgeber (12) und einem am Lenkführungshebel angeordneten Magnetring (30) mit in Umfangsrichtung vorgegebener Magnetfeldverteilung besteht.

13. Einrichtung nach Anspruch 12,
dadurch gekennzeichnet, daß der Magnetfeldgeber (31) eine Hall-Sonde oder eine Magnetfeldplatte ist.

14. Einrichtung nach Anspruch 12 oder 13,
dadurch gekennzeichnet, daß der Magnetfeldgeber (31) mit einer Temperaturkompensationsschaltung versehen ist.

15. Einrichtung nach einem der Ansprüche 12 bis 14,
dadurch gekennzeichnet, daß der Magnetring (30) ein Aluminiumring oder Kunststoffring mit aufgesetzten bzw. eingesetzten Stabmagneten (32) ggf. unterschiedlicher Magnetfeldstärke ist.

16. Einrichtung nach einem der Ansprüche 12 bis 14,
dadurch gekennzeichnet, daß der Magnetring (30) einen Magnetringträger umfaßt, der eine magnetisierbare Kunststoffolie trägt, die zur Erzielung einer gewünschten Magnetfeld-Drehwinkel-Kennlinie inhomogen magnetisiert wird.

17. Einrichtung nach einem der vorhergehenden Ansprüche,
dadurch gekennzeichnet, daß die Berechnungseinheit ein Mikrocomputer ist.

EP 0 381 963 A1

Hall A    Hall R    Fig. 3

Hall B

Fig. 2

Fig. 1

Fig. 4

EP 0 381 963 A1

a) Signal Hall A

b) Signal Hall B

c) Signal Hall R

d) Rechtecke A

e) Rechtecke B

f) Rechteck R

g) Rechtecke B̄

h) A und B̄

i) (A und B̄) und R

Fig. 5

Fig. 6

Fig. 8

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3819839 (NISSAN ET AL.) <br> * Spalte 5, Zeilen 40 - 51 * <br> * Spalte 8, Zeilen 3 - 60; Figuren 4, 5 * | 1, 17 | B62D15/02 |
| A | | 4, 5 | |
| A | EP-A-0184997 (FIAT) <br> * das ganze Dokument * <br> --- | 1, 5, 11 | |
| A | DE-A-2659437 (STEINBOCK) <br> * Ansprüche 1-5; Figuren 1, 2 * <br> --- | 1, 2, 5 | |
| A | GB-A-2050627 (RANSOME HOFFMANN POLLARD) <br> * Zusammenfassung; Figuren 10, 11 * <br> --- | 1, 2, 5 | |
| A | GB-A-2170763 (HONDA) <br> * Seite 3, Zeilen 12 - 28; Figuren 4, 7, 8 * <br> --- | 1, 3, 5 | |
| A | EP-A-0174772 (MITSUBISHI) <br> --- | | |
| A | EP-A-0227343 (FORD) <br> ----- | | |

**RECHERCHIERTE SACHGEBIETE (Int. Cl.5)**

B62D
B60G
G01D

Der vorliegende Recherchenbericht wurde für alle Patentansprüche erstellt

| Recherchenort | Abschlußdatum der Recherche | Prüfer |
|---|---|---|
| BERLIN | 26 APRIL 1990 | KRIEGER, P |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)